# FASCICULE DE BREVET EUROPEEN

(11) **EP 3 639 349 B1**
(45) Date de publication et mention de la délivrance du brevet: **09.07.2025**
(21) Numéro de dépôt: 18729167.9
(22) Date de dépôt: 12.06.2018
(51) Int. Cl.: H02K 29/03

(54) **MACHINE ELECTRIQUE TOURNANTE**
ROTIERENDE ELEKTRISCHE MASCHINE
ROTARY ELECTRICAL MACHINE

(30) Priorité: 15.06.2017 FR 1755442
(43) Date de publication de la demande: 22.04.2020
(73) Titulaire: Moteurs Leroy-Somer, 16915 Angouleme Cedex 9 (FR)
(72) Inventeur: JOURDAN, Dominique, 69230 Saint Genis-Laval (FR)
(74) Mandataire: Ipsilon NNY
(86) Numéro de dépôt international: PCT/EP2018/065533
(87) Numéro de publication internationale: WO 2018/229065

(56) Documents cités:
- WO-A1-2015/068749
- WO-A1-2015/068749
- CN-A- 102 355 072
- DE-A1- 102009 024 014
- DE-A1- 102014 222 064
- DE-A1- 102014 222 064
- US-A1- 2008 157 619
- US-A1- 2008 157 619
- US-A1- 2011 316 288
- US-A1- 2012 126 654
- US-A1- 2012 126 654
- US-B1- 6 727 630
- US-B1- 6 727 630

## Description

La présente invention concerne le domaine des machines électriques tournantes, et plus particulièrement mais non exclusivement celles utilisées pour la motorisation de robots.

La demande EP 1 793 482 porte sur une machine électrique tournante à ondulation de couple réduite en charge, qui est destinée à l'entraînement de cabines d'ascenseurs, et comporte un rotor extérieur ayant des faces sensiblement planes dirigées vers le stator.

US 2008/157619 a pour objet une machine à rotor extérieur, dans laquelle le rotor comporte des aimants permanents de forme générale cylindrique, dont la surface faisant face au stator intérieur est de forme concave.

Dans US 6 727 630, le rotor est extérieur et on cherche à ménager un écartement variable avec la surface du stator intérieur.

La demande US 2012/126654 porte sur un moteur ayant un rotor à aimants permanents qui comportent des encoches afin de réduire le crantage magnétique.

WO 2015/068749 a pour objet un rotor dont les aimants permanents sont plats ou convexes vers le stator.

DE 10 2014 222064 porte sur un rotor dont les aimants permanents sont convexes vers le stator.

On connaît également des machines électriques tournantes à rotor extérieur, dans lesquelles les aimants permanents du rotor extérieur ont une face principale dirigée vers le stator, de forme cylindrique de révolution.

Dans le cas d'un rotor intérieur, la face principale d'un aimant dirigée vers le stator est généralement de forme convexe.

Or, en particulier dans le domaine de la motorisation des robots, il peut être nécessaire de réduire le crantage magnétique d'une machine électrique tournante, notamment par exemple pour un moteur à aimants permanents piloté par un variateur de fréquence. Le crantage magnétique est aussi appelé couple de détente (« *cogging* » en anglais), et correspond à une ondulation de couple à vide ou à très faible charge.

Il existe donc un besoin, en particulier dans le domaine de la motorisation des robots, pour disposer de machines électriques tournante à faible ondulation de couple à vide ou sous très faible charge.

L'invention vise à répondre à tout ou partie de ce besoin et a pour objet, selon l'un de ses aspects, une machine électrique tournante telle que définie à la revendication 1.

La présence d'une face de forme générale concave dirigée vers le stator pour les aimants permanents du rotor permet d'optimiser les ondulations de couple à vide ou sous très faible charge.

On peut ainsi chercher à minimiser les ondulations de couples tout en obtenant un couple pointe minimum à atteindre, pour un entrefer mécanique préfixé.

En outre, le rotor a une meilleure capacité à résister à la désaimantation.

### Rotor

Par « face de forme générale concave », on entend que la face des aimants permanents du rotor dirigée vers le stator présente une courbure lui conférant une surface en creux. La face comporte une ou des portions concaves et une ou des portions planes.

La présence de portions planes peut permettre de mieux éviter les interférences entre le rotor et le stator.

Dans un mode de réalisation, le rotor peut être intérieur. Dans ce cas, la face des aimants dirigée vers le stator correspond à la face des aimants opposée à un axe de rotation X de la machine.

En variante, le rotor peut être extérieur, ce qui peut lui permettre notamment de tourner à une vitesse relativement élevée en limitant le risque de détachement des aimants. Dans ce cas, la face des aimants dirigée vers le stator correspond à la face des aimants dirigée vers l'axe de rotation X de la machine.

Dans le cas d'un rotor extérieur, la concavité de la face dirigée vers le stator des aimants permanents du rotor est supérieure à une concavité seulement conférée par une forme cylindrique de la face, laquelle serait due à la disposition extérieure du rotor pour permettre le placement du stator à l'intérieur de celui-ci et de ménager un entrefer suffisant entre le rotor et le stator. Autrement dit, la concavité des faces dirigées vers le stator des aimants permanents du rotor est plus profonde qu'une surface cylindrique de révolution.

L'arbre du rotor peut être massif, étant par exemple creux ou plein.

En variante, il pourrait ne pas être massif, comportant par exemple un empilement de tôles feuilletées. Les tôles peuvent être recouvertes chacune d'un vernis isolant, afin de limiter les pertes par courant induit

Une face concave d'un aimant permanent du rotor peut comporter une portion concave. La largeur *l* de la portion concave, mesurée perpendiculairement à un rayon du rotor, est comprise entre 0,1π(D_{S}-2*d*)/P et 2π(D_{S}-2*d*)/P mm (millimètres),

Où D_{S} est le diamètre d'alésage du stator,
P le nombre de pôles du rotor, et
*d* l'entrefer simple, c'est-à-dire la plus petite largeur de l'entrefer.

La largeur *l* de la portion concave, mesurée perpendiculairement à un rayon du rotor, peut être comprise entre 2 et 56 mm, mieux entre 4 et 40 mm, voire entre 8 et 20 mm, encore mieux entre 8 et 12 mm.

Une largeur d'un aimant permanent du rotor mesuré perpendiculairement à l'axe de rotation est par exemple comprise entre 0,1π(D_{S}-2*d*)/P et 2*π*(D_{S}-2*d*)/P mm (millimètres).

La largeur d'un aimant permanent du rotor mesuré perpendiculairement à l'axe de rotation est par exemple comprise entre 4 et 56 mm, mieux entre 6 et 50 mm, voire entre 8 et 40 mm, encore mieux entre 10 et 20 mm, étant par exemple de l'ordre de 13 mm.

La plus grande profondeur *p* de la concavité de la portion concave, mesurée selon un rayon du rotor, peut être comprise entre 0,01 mm et l'épaisseur *h* de l'aimant correspondant, notamment entre 0,05 et 3 mm, voire entre 0,1 et 1,5 mm.

La plus grande profondeur de la concavité de la portion concave, mesurée selon un rayon du rotor, peut être située au milieu de la face concave de l'aimant permanent correspondant. Un aimant permanent est de préférence symétrique par rapport à un plan le coupant en son milieu, ce plan passant par l'axe de rotation de la machine et un rayon du rotor. En variante, la plus grande profondeur de la concavité de la portion concave, mesurée selon un rayon du rotor, est située ailleurs qu'au milieu de la face concave de l'aimant permanent correspondant. Un aimant permanent peut ne pas être symétrique par rapport à un plan le coupant en son milieu.

La portion concave peut être en section une portion de cercle ou d'ellipse. Le rayon du cercle ou le grand axe de l'ellipse peut être compris par exemple compris entre 0,1 *h* *, où *h* est l'épaisseur de l'aimant, et 100 *h* mm, notamment entre 4 et 56 mm, mieux entre 6 et 40 mm, étant par exemple de l'ordre de 13 mm.

La portion concave d'une face concave est disposée entre deux portions latérales planes. La présence de portions latérales planes sur la face de forme générale concave permet de bénéficier de l'avantage de la concavité pour la face des aimants orientée vers le stator, tout en ayant un entrefer suffisant entre le rotor et le stator.

La largeur d'une portion latérale plane mesurée perpendiculairement à un rayon du rotor est par exemple comprise entre 0 et la largeur L de l'aimant, mieux entre 0,75 et 7 mm, étant par exemple de l'ordre de 2 mm.

La portion concave peut constituer de 20 à 100% de la largeur totale de l'aimant correspondant, mieux entre 25 et 90%, voire entre 40 et 80%. Dans un mode de réalisation, la portion concave constitue 75% de la largeur totale de l'aimant correspondant. Dans un autre mode de réalisation, en l'absence de portion latérale plane, la portion concave constitue 100% de la largeur totale de l'aimant correspondant.

Les aimants permanents du rotor présentent, lorsque la machine est observée selon l'axe de rotation, une section transversale de forme allongée. En particulier, les aimants permanents du rotor peuvent présenter, lorsque la machine est observée selon l'axe de rotation du rotor, une section transversale de forme générale rectangulaire de grand côté orienté perpendiculairement à un rayon de la machine.

Les aimants permanents du rotor peuvent avoir une épaisseur *h,* mesurée selon un rayon du rotor, comprise entre 0,5 et 32 *d,* où *d* est la plus petite largeur de l'entrefer, notamment entre 1 et 20 mm, mieux entre 2 et 10 mm, voire entre 3 et 5 mm.

Un ratio *p*/*h* entre la plus grande profondeur de la concavité de la portion concave, mesurée selon un rayon du rotor, et l'épaisseur d'un aimant permanent est par exemple comprise entre 0,01 et 0,9, mieux entre 0,1 et 0,4.

Le rotor et le stator ménagent entre eux un entrefer. L'entrefer peut avoir une largeur, mesurée selon un rayon de la machine, comprise entre 0,5 et 3 mm, mieux entre 0,6 et 1.4 mm, étant par exemple de l'ordre de 0,9 mm. L'entrefer est de préférence supérieur à 5/10 mm, mieux supérieur à 7/10 mm, afin de permettre la rotation du rotor dans le ou autour du stator.

La largeur *d₀* de l'entrefer, mesurée selon un rayon passant par le milieu d'un aimant, peut être comprise entre 0,5 et 5 mm, mieux entre 0,75 et 3 mm, étant par exemple de l'ordre de 1,6 mm. L'entrefer peut être au plus large au milieu d'un aimant, pour la machine selon l'invention, dans la mesure où la concavité de la face concave de l'aimant y est la plus profonde.

L'alésage D_{R} du rotor, qui correspond au diamètre extérieur du rotor dans le cas d'un rotor intérieur, est par exemple compris entre 15 et 100 mm, mieux entre 20 et 70 mm, étant par exemple de l'ordre de 65 mm.

Les aimants peuvent être monolithiques ou non. Dans un mode de réalisation, un pôle du rotor est formé d'un aimant permanent d'un seul bloc. En variante, un pôle du rotor est formé de plusieurs aimants qui peuvent être disposés les uns à la suite des autres lorsque l'on se déplace le long de l'axe de rotation du rotor.

Les aimants permanents peuvent être réalisés en ferrites, en plasto-ferrites, en terres rares ou plasto-terres rares, ou AlNiCo.

Les aimants permanents peuvent être formés à partir d'une poudre, puis usinés.

L'induction rémanente dans les aimants permanents d'un pôle du rotor peut être comprise entre 0,2 Tesla et 1,5 Tesla, mieux entre 0,3 Tesla et 1,3 Tesla, étant par exemple de l'ordre de 1,2 Tesla.

Les aimants permanents du rotor comportent une face de fixation opposée à la face concave dirigée vers le stator. La face de fixation peut être plane. Une face plane peut faciliter l'installation des aimants sur l'arbre. En variante, la face de fixation pourrait être convexe, ce qui peut permettre d'améliorer les performances électromagnétiques de la machine. La convexité de la face de fixation peut être dirigée vers l'axe de rotation dans le cas d'un rotor intérieur, ou vers l'extérieur dans le cas d'un rotor extérieur, ce qui peut permettre d'améliorer les performances électromagnétiques de la machine.

Dans le cas d'une face plane, la face plane est orientée perpendiculairement au rayon passant par l'axe de rotation et coupant l'aimant correspondant à mi-longueur.

Les aimants permanents peuvent être fixés à l'arbre du rotor par collage, par exemple sur une surface cylindrique de l'arbre ou dans un logement prévu à cet effet à la surface de l'arbre. En variante, ils peuvent être sertis dans un logement correspondant de l'arbre. Le logement peut avoir une surface plane ou concave, en fonction de la forme de la face de fixation des aimants.

L'arbre du rotor peut être réalisé par un empilage de tôles magnétiques.

### Stator

Le stator peut être à bobinage concentré. Le stator peut comporter des dents et des bobines disposées sur les dents. Le stator peut ainsi être bobiné sur dents, autrement dit à bobinage non réparti. En variante, le stator pourrait être à bobinage réparti.

Les dents du stator peuvent comporter des épanouissements polaires. En variante, les dents du stator pourraient être dépourvues d'épanouissements polaires.

L'ouverture des encoches du stator, mesurée circonférentiellement, entre les épanouissements polaires le cas échéant, est par exemple comprise entre 0,175 mm et π*D_{S} - N*L_{S} mm (millimètres),
où D_{S} est le diamètre d'alésage du stator,
N le nombre de dents du stator, et
L_{S} est la largeur des dents du stator,
par exemple inférieure à 8 mm, notamment entre 0,5 et 3 mm, étant par exemple de l'ordre de 1,5 mm.

Les dents du stator ont des faces d'extrémités dirigées vers le rotor de forme concave, dans le cas d'un rotor intérieur. En variante, dans le cas d'un rotor extérieur, les dents du stator peuvent avoir des faces d'extrémités dirigées vers le rotor de forme convexe.

Les faces d'extrémité des dents du stator peuvent être par exemple des portions de cylindre, qui peuvent avoir un rayon de courbure correspondant à la distance séparant le sommet des dents de l'axe de rotation X de la machine.

L'alésage D_{S} du stator, qui correspond au diamètre intérieur du stator dans le cas d'un stator extérieur, est par exemple compris entre 20 et 220 mm, mieux entre 25 et 110 mm, étant par exemple de l'ordre de 70 mm.

Les dents du stator forment une culasse du stator qui peut être d'un seul tenant, ou en variante qui peut être formée d'un chapelet de dents reliées entre elles par des ponts de matière, ou encore d'une pluralité de dents séparées. Dans tous les cas, le stator peut comporter une carcasse extérieure entourant la culasse.

Les dents du stator peuvent être réalisées avec un empilage de tôles magnétiques, recouvertes chacune d'un vernis isolant, afin de limiter les pertes par courant induit.

### Machine

La machine peut constituer un générateur ou un moteur.

La machine électrique tournante selon l'invention peut avoir un diamètre extérieur par exemple compris entre 40 et 280 mm, mieux entre 50 et 220 mm, étant par exemple de l'ordre de 135 mm. Le diamètre peut par exemple être inférieur ou égal à 240 mm, étant notamment compris ente 40 mm et 190 mm.

La puissance de la machine peut être comprise entre 0,1 et 15 kW, étant par exemple de l'ordre de 0,75 kW, cette valeur n'étant nullement limitative.

La machine peut comporter un seul rotor intérieur ou, en variante, un seul rotor extérieur, ou en variante encore un rotor intérieur et un rotor extérieur, disposés radialement de part et d'autre du stator et accouplés en rotation.

Le nombre d'encoches par pôle et par phase peut être entier ou fractionnaire.

Le nombre de pôles P au rotor est par exemple compris entre 4 et 40 et le nombre de dents S au stator est par exemple compris entre 6 et 48.

L'invention a encore pour objet un robot comportant une machine électrique tournante telle que décrite plus haut pour sa motorisation.

### Description détaillée

L'invention pourra être mieux comprise à la lecture de la description détaillée qui va suivre, d'exemples de mise en œuvre non limitatifs de celle-ci, et à l'examen du dessin annexé, sur lequel :
- la figure 1 est une vue schématique et partielle d'une machine électrique tournante conforme à l'invention,
- les figures 2a et 2b sont des vues en coupe respectivement transversale et longitudinale d'un aimant permanent de la machine de la figure 1, et
- la figure 3 est une vue analogue à la figure 1 d'une variante de réalisation.

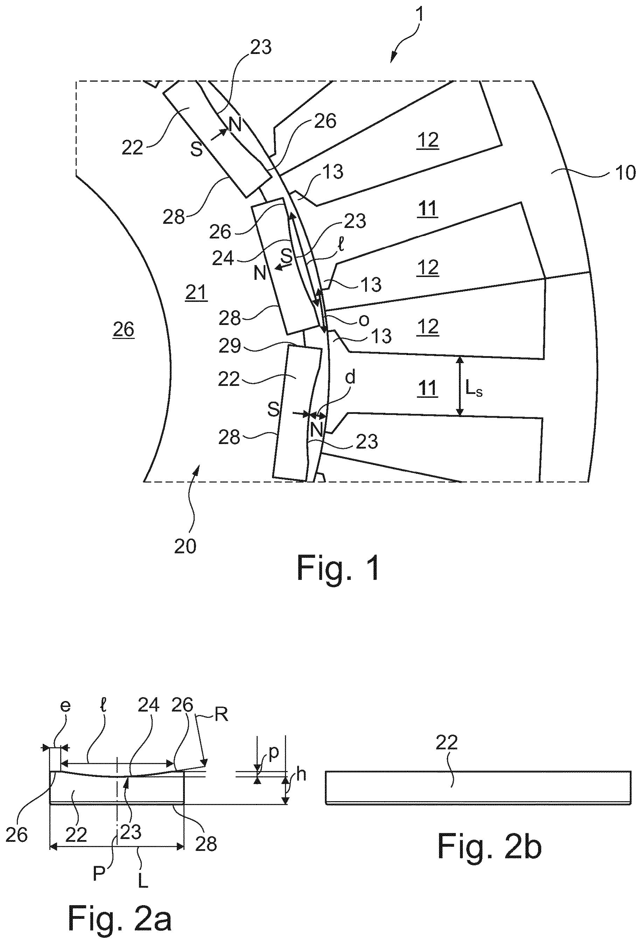

On a représenté à la figure 1 une machine électrique tournante 1 conforme à l'invention, comportant un stator 10 extérieur et un rotor 20 intérieur comportant un arbre 21 et des aimants permanents 22 disposés en surface de l'arbre 21.

Le stator 10 est dans l'exemple décrit à bobinage concentré. Le stator 10 comporte des dents 11 portant chacune une bobine individuelle 12 disposée sur la dent correspondante. Les bobines 12 sont connectées électriquement entre elles de manière à être alimentées par un courant triphasé.

Les dents du stator comportent des épanouissements polaires 13. L'ouverture *o* des encoches du stator, mesurée circonférentiellement, entre les épanouissements polaires 13, est par exemple de l'ordre de 1,5 mm.

L'alésage du stator, qui correspond au diamètre intérieur du stator, est de l'ordre de 90 mm.

Le stator comporte encore une carcasse extérieure entourant la culasse, non représentée.

Au rotor, l'arbre 21 est massif, étant creux en son milieu, ménageant un espace 26.

Conformément à l'invention, les aimants permanents 22 du rotor comportent une face 23 dirigée vers le stator, qui est de forme générale concave. La face 23 des aimants dirigée vers le stator correspond à la face des aimants opposée à l'axe de rotation X de la machine.

La face concave 23 d'un aimant permanent 22 du rotor comporte une portion concave 24.

La largeur *l* de la portion concave 24, mesurée perpendiculairement à un rayon du rotor, en section, est de l'ordre de 9 mm, dans l'exemple décrit.

La largeur L d'un aimant permanent 22 du rotor mesuré perpendiculairement à l'axe de rotation, en section, est de l'ordre de 13 mm.

La plus grande profondeur *p* de la concavité de la portion concave, mesurée selon un rayon du rotor, en section, est de l'ordre de 0,5 mm.

La plus grande profondeur de la concavité de la portion concave, mesurée selon un rayon du rotor, est dans l'exemple décrit située au milieu de la face concave de l'aimant permanent correspondant. L'aimant permanent est symétrique par rapport à un plan P le coupant en son milieu, ce plan passant par l'axe de rotation de la machine et un rayon du rotor.

La portion concave 24 est dans l'exemple décrit en section une portion de cercle, de rayon R de l'ordre de 20 mm.

La portion concave 24 de la face concave 23 est disposée entre deux portions latérales planes 26.

La largeur *e* d'une portion latérale plane mesurée perpendiculairement à un rayon du rotor, en section, est de l'ordre de 2 mm.

La portion concave constitue dans l'exemple décrit environ 75 % de la largeur totale de l'aimant correspondant.

Les aimants permanents du rotor présentent, lorsque la machine est observée selon l'axe de rotation, une section transversale de forme générale rectangulaire, de grand côté orienté perpendiculairement à un rayon de la machine.

Les aimants permanents 22 du rotor ont une épaisseur *h,* mesurée selon un rayon du rotor, en section, de l'ordre de 3 mm.

Un ratio *p*/*h* entre la plus grande profondeur *p* de la concavité de la portion concave, mesurée selon un rayon du rotor, et l'épaisseur *h* de l'aimant permanent 22 est de l'ordre de 0,2.

Le rotor et le stator ménagent entre eux un entrefer 30. L'entrefer a une largeur, mesurée selon un rayon de la machine, en section, de l'ordre de 0,9 mm. La largeur *d₀* de l'entrefer, mesurée selon un rayon passant par le milieu d'un aimant 22, en section, est de l'ordre de 1,5 mm.

L'alésage du rotor, qui correspond au diamètre extérieur du rotor, est de l'ordre de 50 mm.

Les aimants permanents 22 du rotor comportent une face de fixation 28 opposée à la face concave 23 dirigée vers le stator, qui est dans l'exemple décrit de forme plane. La face plane est orientée perpendiculairement au rayon passant par l'axe de rotation et coupant l'aimant correspondant 22 à mi-longueur.

Les aimants permanents 22 sont fixés à l'arbre du rotor par collage dans un logement 29 prévu à cet effet à la surface de l'arbre 21. Le logement 29 a une surface plane correspondant à la forme de la face de fixation des aimants.

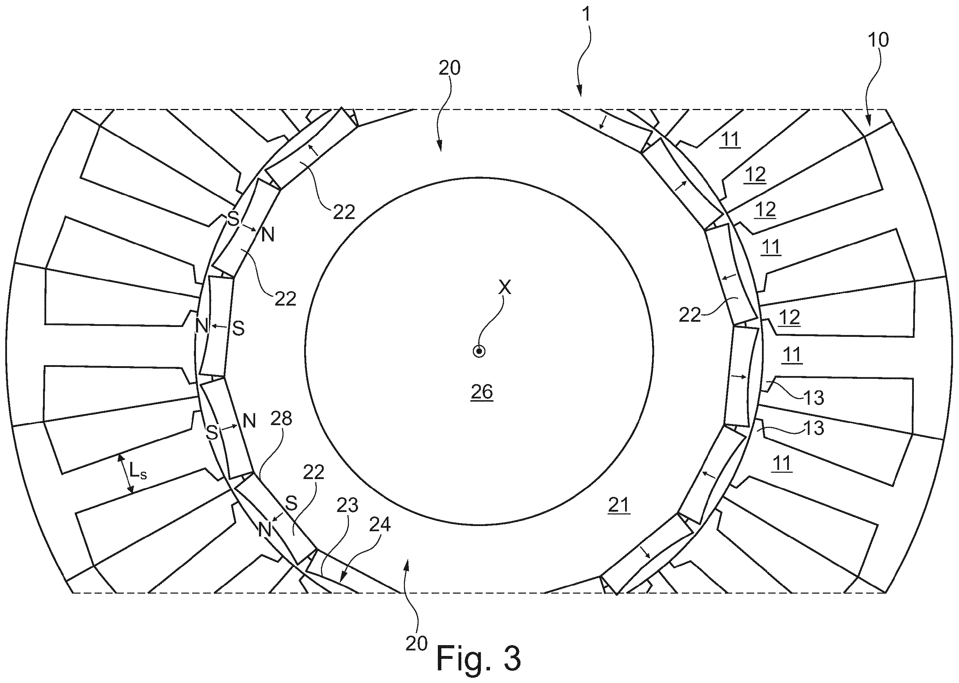

La face concave 23 peut comporter une ou des portions concaves 24et une ou des portions planes 26, comme illustré précédemment, ou être entièrement concave, comme on l'a illustré à titre d'exemple à la figure 3.

Dans cet exemple, en l'absence de portion latérale plane, la portion concave 24 constitue 100% de la largeur totale de l'aimant correspondant.

Dans les exemples considérés, le rotor comporte 16 pôles et le stator 18 dents. On ne sort pas du cadre de la présente invention si leur nombre est différent.

L'invention n'est pas limitée aux exemples de réalisation qui viennent d'être décrits, et le rotor peut par exemple comporter un nombre de pôles différent, de même que pour les dents du stator.

En outre, dans l'exemple décrit, le rotor est intérieur, mais on ne sort pas du cadre de la présente invention si le rotor est extérieur, ou si la machine comporte à la fois un rotor intérieur et un rotor extérieur disposés chacun radialement de part et d'autre du stator et accouplés en rotation.

La machine peut être utilisée non seulement en moteur mais également en générateur, pour effectuer une récupération d'énergie, par exemple.

La machine selon l'invention peut trouver des applications autres que la motorisation de robots.

## Revendications

1. Machine électrique tournante (1) comportant :
- un stator (10), comportant des dents (11), et
- un rotor (20), comportant un arbre (21) et des aimants permanents (22) disposés en surface de l'arbre, les aimants permanents (22) comportant une face dirigée vers le stator de forme générale concave, une face concave (23) d'un aimant permanent du rotor comporte une portion concave (24), la portion concave (24) d'une face concave étant disposée entre deux portions latérales planes (26),
les aimants présentant, lorsque la machine est observée selon l'axe de rotation, une section transversale de forme allongée, le rotor étant intérieur,
machine **caractérisée par le fait que** la largeur (*l*) de la portion concave, mesurée perpendiculairement à un rayon du rotor, est comprise entre 0,1π(D_{S}-2*d*)/P et 2*π*(D_{S}-2*d*)/P mm (millimètres), où D_{S} est le diamètre d'alésage du stator, P le nombre de pôles du rotor, et *d* l'entrefer simple, c'est-à-dire la plus petite largeur de l'entrefer,
les dents du stator ayant des faces d'extrémités dirigées vers le rotor de forme concave.

2. Machine selon la revendication précédente, dans laquelle une face concave (23) d'un aimant permanent du rotor comporte une portion concave (24), de largeur (*l*) mesurée perpendiculairement à un rayon du rotor comprise entre 2 et 56 mm, mieux entre 8 et 12 mm.

3. Machine selon la revendication précédente, la plus grande profondeur (*p*) de la concavité de la portion concave, mesurée selon un rayon du rotor, est comprise entre 0,05 et 3 mm, mieux entre 0,1 et 1,5 mm.

4. Machine selon l'une des deux revendications précédentes, la portion concave étant en section une portion de cercle ou d'ellipse.

5. Machine selon l'une quelconque des revendications précédentes, les aimants permanents du rotor ayant une épaisseur (*h*), mesurée selon un rayon du rotor, comprise entre 2 et 10 mm, mieux entre 3 et 5 mm.

6. Machine selon l'une quelconque des revendications précédentes, un ratio (*p*/*h*) entre la plus grande profondeur de la concavité de la portion concave, mesurée selon un rayon du rotor, et l'épaisseur d'un aimant permanent étant compris entre 0 et 0,9, mieux entre 0,1 et 0,4.

7. Machine selon l'une quelconque des revendications précédentes, le rotor et le stator ménageant entre eux un entrefer (30), l'entrefer ayant une largeur, mesurée selon un rayon de la machine, comprise entre 0,5 et 3 mm, mieux entre 0,6 et 1.4 mm.

8. Machine selon la revendication précédente, la largeur (*d₀*) de l'entrefer mesurée selon un rayon passant par le milieu d'un aimant est comprise entre 0,5 et 5 mm, mieux entre 0,75 et 3 mm.

9. Machine selon l'une quelconque des revendications précédentes, les aimants permanents étant fixés à l'arbre du rotor par collage, notamment sur une surface cylindrique de l'arbre ou dans un logement (29) prévu à cet effet à la surface de l'arbre.

10. Machine selon l'une quelconque des revendications précédentes, les aimants permanents comportant une face de fixation (28) opposée à la face concave dirigée vers le stator qui est plane.

11. Machine selon l'une quelconque des revendications précédentes, le stator (10) étant à bobinage concentré, comportant des bobines (12) disposées sur les dents.

12. Machine selon la revendication précédente, les dents du stator comportant des épanouissements polaires (13).

13. Machine selon la revendication précédente, l'ouverture (*o*) des encoches du stator, mesurée circonférentiellement, entre les épanouissements polaires (13) le cas échéant, est comprise entre 0,175 et 8 mm, mieux entre 0,5 et 3 mm.

## Patentansprüche

1. Rotierende elektrische Maschine (1), umfassend:
- einen Stator (10), der Zähne (11) umfasst, und
- einen Rotor (20), der eine Welle (21) und an der Oberfläche der Welle angeordnete Permanentmagnete (22) umfasst, wobei die Permanentmagnete (22) eine zu dem Stator gerichtete Fläche von konkaver Grundform umfassen, wobei eine konkave Fläche (23) eines Permanentmagneten des Rotors einen konkaven Abschnitt (24) umfasst, wobei der konkave Abschnitt (24) einer konkaven Fläche zwischen zwei planen seitlichen Abschnitten (26) angeordnet ist,
wobei die Permanentmagnete, wenn die Maschine entlang der Rotationsachse betrachtet wird, einen Querschnitt von langgestreckter Form aufweisen, wobei der Rotor innen ist,
wobei die Maschine **dadurch gekennzeichnet ist, dass** die senkrecht zu einem Radius des Rotors gemessene Breite (1) des konkaven Abschnitts zwischen 0,1π(D_{S}-2*d*)/P und 2π(D_{S}-2*d*)/P mm (Millimeter) beträgt, wobei D_{S} der Bohrungsdurchmesser des Stators ist, P die Polzahl des Rotors ist und d der einfache Luftspalt ist, d. h. die kleinste Breite des Luftspalts,
wobei die Zähne des Rotors zu dem Rotor gerichtete Endflächen von konkaver Form besitzen.

2. Maschine nach dem vorhergehenden Anspruch, wobei eine konkave Fläche (23) eines Permanentmagneten des Rotors einen konkaven Abschnitt (24) mit einer senkrecht azu einem Radius des Rotors gemessenen Breite (*l*) zwischen 2 und 56 mm, besser zwischen 8 und 12 mm, umfasst.

3. Maschine nach dem vorhergehenden Anspruch, wobei die entlang eines Radius des Rotors gemessene größte Tiefe (*p*) der Konkavität des konkaven Abschnitts zwischen 0,05 und 3 mm, besser zwischen 0,1 und 1,5 mm, beträgt.

4. Maschine nach einem der beiden vorhergehenden Ansprüche, wobei der konkave Abschnitt im Querschnitt ein Kreis- oder Ellipsenabschnitt ist.

5. Maschine nach einem der vorhergehenden Ansprüche, wobei die Permanentmagnete des Rotors eine entlang eines Radius des Rotors gemessene Dicke (*h*) zwischen 2 und 10 mm, besser zwischen 3 und 5 mm, besitzen.

6. Maschine nach einem der vorhergehenden Ansprüche, wobei ein Verhältnis (*p*/*h*) zwischen der entlang eines Radius des Rotors gemessenen größten Tiefe der Konkavität des konkaven Abschnitts und der Dicke eines Permanentmagneten zwischen 0 und 0,9, besser zwischen 0,1 und 0,4, beträgt.

7. Maschine nach einem der vorhergehenden Ansprüche, wobei der Rotor und der Stator zwischen sich einen Luftspalt (30) ausbilden, wobei der Luftspalt eine entlang eines Radius der Maschine gemessene Breite zwischen 0,5 und 3 mm, besser zwischen 0,6 und 1,4 mm, besitzt.

8. Maschine nach dem vorhergehenden Anspruch, wobei die entlang eines Radius gemessene Breite (*d₀*) des Luftspalts, die durch die Mitte eines Magneten verläuft, zwischen 0,5 und 5 mm, besser zwischen 0,75 und 3 mm, beträgt.

9. Maschine nach einem der vorhergehenden Ansprüche, wobei die Permanentmagnete an der Welle des Rotors durch Kleben befestigt sind, insbesondere auf einer zylindrischen Oberfläche der Welle oder in einer dazu an der Oberfläche der Welle vorgesehenen Aufnahme (29).

10. Maschine nach einem der vorhergehenden Ansprüche, wobei die Permanentmagnete eine zu der zu dem Rotor gerichteten konkaven Fläche entgegengesetzte Befestigungsfläche (28) umfassen, die plan ist.

11. Maschine nach einem der vorhergehenden Ansprüche, wobei der Stator (10) mit konzentrierter Wicklung ausgeführt ist und an den Zähnen angeordnete Spulen (12) umfasst.

12. Maschine nach dem vorhergehenden Anspruch, wobei die Zähne des Stators Polschuhe (13) umfassen.

13. Maschine nach dem vorhergehenden Anspruch, wobei die umfänglich gemessene Öffnung (*o*) der Nuten des Stators, gegebenenfalls zwischen den Polschuhen (13), zwischen 0,175 und 8 mm, besser zwischen 0,5 und 3 mm, beträgt.

## Claims

1. Rotary electrical machine (1), comprising:
- a stator (10), comprising teeth (11), and
- a rotor (20), comprising a shaft (21) and permanent magnets (22) arranged on the surface of the shaft, the permanent magnets (22) comprising a face of concave overall shape directed towards the stator, a concave face (23) of a permanent magnet of the rotor comprises a concave portion (24), the concave portion (24) of a concave face being arranged between two planar lateral portions (26),
the magnets having, when the machine is viewed along the axis of rotation, a cross section of elongate shape, the rotor being internal,
the machine being **characterized in that** the width (1) of the concave portion, measured perpendicular to a radius of the rotor, is between 0.1π(D_{S}-2*d*)/P and 2π(D_{S}-2*d*)/P mm (millimetres), where D_{S} is the bore diameter of the stator, P is the number of poles of the rotor, and d is the simple air gap, i.e. the smallest width of the air gap,
the teeth of the stator having end faces of concave shape directed towards the rotor.

2. Machine according to the preceding claim, wherein a concave face (23) of a permanent magnet of the rotor comprises a concave portion (24) having a width (1), measured perpendicular to a radius of the rotor, of between 2 and 56 mm, better still between 8 and 12 mm.

3. Machine according to the preceding claim, the greatest depth (*p*) of the concavity of the concave portion, measured along a radius of the rotor, is between 0.05 and 3 mm, better still between 0.1 and 1.5 mm.

4. Machine according to either of the two preceding claims, the concave portion being a portion of a circle or ellipse in section.

5. Machine according to any one of the preceding claims, the permanent magnets of the rotor having a thickness (*h*), measured along a radius of the rotor, of between 2 and 10 mm, better still between 3 and 5 mm.

6. Machine according to any one of the preceding claims, a ratio (*p*/*h*) between the greatest depth of the concavity of the concave portion, measured along a radius of the rotor, and the thickness of a permanent magnet being between 0 and 0.9, better still between 0.1 and 0.4.

7. Machine according to any one of the preceding claims, the rotor and the stator forming an air gap (30) between them, the air gap having a width, measured along a radius of the machine, of between 0.5 and 3 mm, better still between 0.6 and 1.4 mm.

8. Machine according to the preceding claim, the width (*d₀*) of the air gap measured along a radius passing through the centre of a magnet is between 0.5 and 5 mm, better still between 0.75 and 3 mm.

9. Machine according to any one of the preceding claims, the permanent magnets being fastened to the shaft of the rotor by adhesive bonding, in particular on a cylindrical surface of the shaft or in a housing (29) provided for this purpose on the surface of the shaft.

10. Machine according to any one of the preceding claims, the permanent magnets comprising a planar fastening face (28) on the opposite side to the concave face directed towards the stator.

11. Machine according to any one of the preceding claims, the stator (10) having concentrated winding, comprising coils (12) arranged on the teeth.

12. Machine according to the preceding claim, the teeth of the stator comprising pole shoes (13).

13. Machine according to the preceding claim, the opening (*o*) of the slots in the stator, measured circumferentially, between the pole shoes (13) if appropriate, is between 0.175 and 8 mm, better still between 0.5 and 3 mm.
